# EUROPÄISCHE PATENTSCHRIFT

(11) **EP 3 463 611 B1**
(45) Veröffentlichungstag und Bekanntmachung des Hinweises auf die Patenterteilung: **08.07.2020**
(21) Anmeldenummer: 17725861.3
(22) Anmeldetag: 24.05.2017
(51) Int. Cl.: B01D 35/06, B01D 29/21, B01D 29/54

(54) **FILTERVORRICHTUNG FÜR FLUIDE**
FILTER DEVICE FOR FLUIDS
DISPOSITIF DE FILTRATION POUR FLUIDES

(30) Priorität: 28.05.2016 DE 102016006509
(43) Veröffentlichungstag der Anmeldung: 10.04.2019
(73) Patentinhaber: Hydac Process Technology GmbH, 66538 Neunkirchen (DE)
(72) Erfinder: OLSCHOK, Markus, 66540 Neunkirchen (DE); SCHINDLER, Christian, 66578 Schiffweiler (DE); SCHWARZKOPF, Alexander, 66606 St. Wendel (DE)
(74) Vertreter: Bartels, Martin Erich Arthur
(86) Internationale Anmeldenummer: PCT/EP2017/000622
(87) Internationale Veröffentlichungsnummer: WO 2017/207095

(56) Entgegenhaltungen:
- DE-A1-102013 014 453
- US-A- 2 580 012
- US-A- 5 174 892
- US-B1- 8 636 907

## Beschreibung

Die Erfindung betrifft eine Filtervorrichtung für Fluide, gemäß der Merkmalsausgestaltung des Oberbegriffes des Patentanspruches 1.

Die Vorabscheidung von ferromagnetischen Verunreinigungen aus dem zu filtrierenden Fluid durch Magnetkraftwirkung ist bei Filtervorrichtungen Stand der Technik. Bei maschinellen Anlagen, bei denen ein Fluidkreislauf zur Schmierung und/oder Kühlung mechanischer Einrichtungen, wie Getrieben oder Pumpen, vorhanden ist, kommt es grundsätzlich durch Abrieb im Betrieb zu einer Eintragung von Metallpartikeln in das Fluid, insbesondere wenn es sich um hoch belastete Getriebe, etwa bei Großmaschinen, wie Windkraftanlagen oder Zementmühlen, handelt. Ferromagnetische Verschmutzungen des Fluids treten auch bei andersartigen Prozessflüssigkeiten in unterschiedlichem Ausmaß auf. Insbesondere bei Waschlaugen, wie sie üblicherweise bei Anlagen zur automatischen Fertigung von Werkstücken benutzt werden, ergeben sich hohe Belastungen des Fluids mit ferromagnetischen Partikeln. Insbesondere bei derart hoch belasteten Fluiden ermöglicht die Partikelabscheidung eine beträchtliche Erhöhung der Standzeit der Filterelemente.

In den Dokumenten DE 10 2006 062 807 B4 und DE 10 2013 014 453 A1 sind Beispiele bekannter Vorrichtungen offenbart. Diese bekannten Filtervorrichtungen weisen als magnetfelderzeugende Einrichtung einen auch als Magnetkerze bezeichneten Magnetstab mit Permanentmagneten auf, der sich bei diesen Vorrichtungen in den inneren Filterhohlraum des betreffenden Filterelements erstreckt und an einem Gehäusedeckel der Filtervorrichtung befestigt ist. Die Außenseite des Magnetstabes bildet die Anhaftfläche, an der sich beim Betrieb metallische Partikel aus dem Fluid anlagern. Um die Anlagerungen auszutragen, muss bei den bekannten Vorrichtungen der Gehäusedeckel abgeschraubt werden, um den Magnetstab zusammen mit dem Filterelement aus dem Gehäuse herausnehmen zu können. Sodann muss der Magnetstab aus dem Filterelement herausgenommen werden, um die an der Außenseite des Magnetstabes anhaftenden Partikel entfernen zu können. Da diese durch die Magnetkraftwirkung an der Außenseite des Magnetstabes gehalten sind, gestaltet sich das Abnehmen der Partikel schwierig. Der Einsatz der bekannten Filtervorrichtungen bedingt daher einen entsprechend hohen Wartungs- und Zeitaufwand.

Durch die US 8 636 907 B1 ist eine gattungsgemäße Filtervorrichtung für Fluide bekannt, mit einem zumindest ein Filterelement aufnehmenden Gehäuse, das einen Einlass für die Zufuhr abzureinigenden Fluids zu einem Unfiltratraum des Gehäuses aufweist, der durch das Filtermedium des jeweiligen Filterelements von einem Filtratraum des Gehäuses getrennt ist, der einen Auslass für Filtrat aufweist, und mit einer innerhalb des Unfiltratraums angeordneten magnetfelderzeugenden Einrichtung, die eine Anhaftfläche für durch Magnetkraftwirkung daran angelagerte feromagnetische Partikel aufweist, die durch zumindest eine die zugeordnete magnetfelderzeugende Einrichtung umfassende Hülle gebildet ist, die sich von zumindest einer Öffnung der Gehäusewand her in den Unfiltratraum erstreckt und in der die jeweilige magnetfelderzeugende Einrichtung derart bewegbar aufnehmbar ist, dass sie in die Hülle einbringbar und aus dieser zumindest teilweise wieder herausnehmbar ist.

Bei der bekannten Lösung greift die jeweilige Hülle der magnetfelderzeugenden Einrichtung in das jeweilige Filterelement selbst oder zwischen diese Elemente ein, was zum einen die Filtration des über den Einlass zugeführten Unfiltrats beeinträchtigt und zum anderen die Austauschbarkeit des jeweiligen Filterelementes gegen ein Neu-Filterelement erschwert.

Weitere Filtervorrichtungen gehen aus der US 2 580 012 und der US 5 174 892 hervor.

Ausgehend von diesem Stand der Technik liegt der Erfindung die Aufgabe zugrunde, eine Filtervorrichtung der genannten Art zur Verfügung zu stellen, die sich durch ein besseres Betriebsverhalten, insbesondere im Rahmen der Filtration, auszeichnet sowie eine vereinfachte Bedienbarkeit der Vorrichtung erlaubt.

Erfindungsgemäß ist diese Aufgabe durch eine Filtervorrichtung gelöst, die die Merkmale des Patentanspruchs 1 in seiner Gesamtheit aufweist.

Dadurch, dass gemäß dem kennzeichnenden Teil des Patentanspruches 1 die jeweilige Hülle der zuordenbaren magnetfelderzeugenden Einrichtung außerhalb des jeweiligen Filterelementes sich im Unfiltratraum parallel zu dem Einlass mit dem Unfiltrat und quer zu dem Auslass mit dem Filtrat erstreckt und dass der Unfiltratraum zumindest teilweise den Auslass an der Stelle des Überganges zum Filtratraum umfasst, ist die jeweilige magnetfelderzeugende Einrichtung von dem jeweiligen Filterelement im Vorrichtungsgehäuse separiert, so dass weder der Filtrationsvorgang beeinträchtigt ist, noch der Austausch des jeweils verbrauchten Filterelementes gegen ein Neu-Filterelement.

Die über den Unfiltrat-Einlass zugeführten magnetisierbaren Partikel werden bereits an der Stelle des Einlasses in das Gehäuse von der jeweils magnetfelderzeugenden Einrichtung direkt abgefangen, bevor diese das jeweilige Filterelement erreichen, indem diese Partikel an einer Hülle haften bleiben, die die magnetfelderzeugende Einrichtung im Wesentlichen umgibt. Bei Herausnehmen der bewegbaren, magnetfelderzeugenden Einrichtung und dem damit einhergehenden Wegfall der Magnetkraftwirkung fallen die nicht mehr angezogenen Partikel von der Hülle ab und können dann problemlos, beispielsweise durch Ausspülen aus dem Unfiltratraum entfernt werden. Der Wartungsaufwand für Austrag und Handhabung der abgeschiedenen Partikel ist dadurch bei der erfindungsgemäßen Filtervorrichtung in beträchtlichem Maße verringert, wozu auch mit beiträgt, dass die Funktion der Partikelabscheidung von magnetfelderzeugender Einrichtung und der sonstigen Partikelabscheidung durch das jeweilige Filterelement innerhalb des gemeinsamen Vorrichtungsgehäuses in diesem räumlich voneinander separiert sind.

Bei einer besonders bevorzugten Ausführungsform der erfindungsgemäßen Filtervorrichtung ist vorgesehen, dass das Gehäuse sich zumindest im Betrieb entlang einer vertikalen Hochachse erstreckt und aus mindestens zwei Gehäuseabschnitten gebildet ist, von denen der untere Gehäuseabschnitt den Einlass und den Auslass aufnimmt, sowie die jeweilige magnetfelderzeugende Einrichtung und dass die jeweils anderen Gehäuseabschnitte der Aufnahme zumindest eines Filterelementes dienen. Hierdurch kann der vorzugsweise auf einem Boden aufständerbare untere Gehäuseabschnitt ortsfest verbleiben und durch Abnahme des jeweils weiteren Gehäuseabschnittes die Filterelemente für deren Austauschvorgang freigelegt werden, wobei die sonstige Filtervorrichtung als Grundbauteil auf dem Boden aufgeständert als Modul verbleibt, was den erneuten Zusammenbau mit den weiteren Modulen erleichtert.

Bei einer weiteren bevorzugten Ausführungsform der erfindungsgemäßen Filtervorrichtung ist vorgesehen, dass der untere Gehäuseabschnitt bodenseitig geschlossen ist und über mindestens einen öffenbaren Auslass für Partikel derart verfügt, dass bei vorzugsweise geschlossenem Auslass für Filtrat das über den Einlass einströmende Unfiltrat die von der jeweils magnetfelderzeugenden Einrichtung gesammelten Partikel von dieser Einrichtung abspült und/oder den unteren Gehäuseabschnitt von Partikeln als Verschmutzung abreinigt. Dergestalt lassen sich über den öffen- und schließbaren Auslass an der Bodenseite des unteren Gehäuseabschnittes die mittels der jeweiligen magnetfelderzeugenden Einrichtung abgefangenen magnetisierbaren Partikel auf kürzestem Wege aus dem Gehäuse der Filtervorrichtung zeitnah abführen.

In besonders platzsparender Weise kann dabei vorgesehen sein, dass beidseits des Auslasses für Filtrat und auf derselben Niveauebene liegend, zwei parallel zueinander angeordnete magnetfelderzeugende Einrichtungen mit ihren Hüllen vorhanden sind, die den unteren Gehäuseabschnitt mit seinem Auffangraum für magnetisierbare Partikel zumindest teilweise, vorzugsweise vollständig, durchgreifen. Dergestalt lassen sich auch homogen verlaufende Magnetfelder im Bereich des Einlasses aufbauen.

Bei besonders vorteilhaften Ausführungsbeispielen weist die jeweilige magnetfelderzeugende Einrichtung einen durch eine Gruppe von Permanentmagneten gebildeten Magnetstab auf, der in einer rohrförmigen Hülle verschiebbar und an einem Rohrende der Hülle für die Handhabung zugänglich ist. Während die permanentmagnetische Felderzeugung ein bevorzugtes Ausführungsbeispiel darstellt, versteht sich, dass in der jeweiligen Hülle eine herausnehmbare Einrichtung für eine elektromagnetische Felderzeugung vorgesehen sein könnte.

Die Anordnung kann mit Vorteil so getroffen sein, dass mehr als eine rohrförmige Hülle für eine jeweilige magnetfelderzeugende Einrichtung, wie einen Magnetstab, vorgesehen ist. Jeweilige Hüllen können sich hierbei in einem seitlichen oder in einem vertikalen Abstand voneinander in den Unfiltratraum hinein oder durch diesen hindurch erstrecken.

Bei besonders vorteilhaften Ausführungsbeispielen ist vorgesehen, dass der untere Gehäuseabschnitt mit einem Bodenteil als bodenseitigem Abschluss versehen ist, dessen Grund den unteren Abschluss des Unfiltratraums bildet, der sich entlang der Außenseite des Filtermediums des jeweiligen Filterelements nach oben fortsetzt, das in einem axialen Abstand vom Grund des Bodenteils angeordnet ist, und dass zumindest eine rohrförmige Hülle sich in horizontaler Richtung durch den zwischen dem Grund des Bodenteils und dem Filterelement befindlichen Teil des Unfiltratraums hindurch erstreckt. Dadurch befindet sich die die Anhaftfläche bildende, jeweilige Hülle im direkten Einströmbereich des Unfiltrats in das Gehäuse, so dass eine Partikel-Vorabscheidung erfolgt, bevor das Unfiltrat mit seiner nicht magnetisierbaren Partikelverschmutzung zum darüberliegenden Filterelement aufsteigt und dessen Filtermedium erreicht.

Mit Vorteil kann die Anordnung derart getroffen sein, dass an einer das jeweilige Filterelement in axialem Abstand vom Grund des Bodenteils festlegenden Elementaufnahme eine Fluidverbindung zwischen dem inneren Hohlraum des Filterelements, der beim Filtrationsvorgang den Filtratraum bildet, und einer Ausgangsleitung für Filtrat als Teil des Auslasses ausgebildet ist, wobei beidseits der Ausgangsleitung je eine rohrförmige Hülle sich durch den Unfiltratraum im Abstand vom Grund des Bodenteils erstreckt.

Die Ausgangsleitung kann sich vorzugsweise koaxial zur Hochachse von der Elementaufnahme zum am Grund des Bodenteils befindlichen Filtratauslass oder Filtratausgang erstrecken, wobei am Grund des Bodenteils neben dem Filtratauslass ein Auslass für von der jeweiligen Hülle abgefallene ferromagnetische Partikel vorgesehen ist. Dieser zusätzliche Auslass kann mit einem Sperrorgan versehen sein, das den Auslass für das Ausspülen von Partikeln auf Anforderung freigibt.

Alternativ kann die Anordnung so getroffen sein, dass die Ausgangsleitung von der Elementaufnahme zu dem an der Seitenwand des Gehäuses befindlichen Filtratauslass verläuft, wobei am Grund des Bodenteils, koaxial zur Hochachse, der Auslass für von der jeweiligen Hülle abgefallene ferromagnetische Partikel vorgesehen ist.

Bei besonders vorteilhaften Ausführungsbeispielen sind Hüllen in Form von von einer Gehäuseseitenwand zu einer anderen Gehäuseseitenwand durchgehenden Rohren vorgesehen, die vorzugsweise an einem Rohrende geschlossen sind und mit ihrem anderen Rohrende den Zugang für einen verschiebbaren Magnetstab bilden.

Die Magnetstäbe können sich in eingebrachter Position bis zu einem geschlossenen Rohrende der Hülle erstrecken und an einem anderen Rohrende mit einem eine Handhabung bildenden Endteil aus dem Rohrende vorstehen. Das vorstehende Endteil kann mit einer Handhabe für eine manuelle Betätigung versehen sein.

Nachstehend ist die Erfindung anhand von in der Zeichnung dargestellten Ausführungsbeispielen im Einzelnen erläutert. Es zeigen:
- Fig. 1: eine in Vertikalrichtung aufgeschnitten gezeichnete perspektivische Schrägansicht eines Ausführungsbeispiels der erfindungsgemäßen Filtervorrichtung;
- Fig. 2: einen schematisch vereinfacht gezeichneten Längsschnitt des Ausführungsbeispiels von Fig. 1;
- Fig. 3: eine in Vertikalrichtung aufgeschnitten gezeichnete perspektivische Schrägansicht eines zweiten Ausführungsbeispiels der erfindungsgemäßen Filtervorrichtung;
- Fig. 4: eine gegenüber Fig. 3 in größerem Maßstab gezeichnete perspektivische Schrägansicht lediglich des das Bodenteil aufnehmenden Gehäuseabschnitts des zweiten Ausführungsbeispiels der erfindungsgemäßen Filtervorrichtung; und
- Fig. 5: eine perspektivische Schrägansicht des horizontal geschnittenen unteren Teils des Gehäuses des zweiten Ausführungsbeispiels, gesehen auf den Grund des Bodenteils.

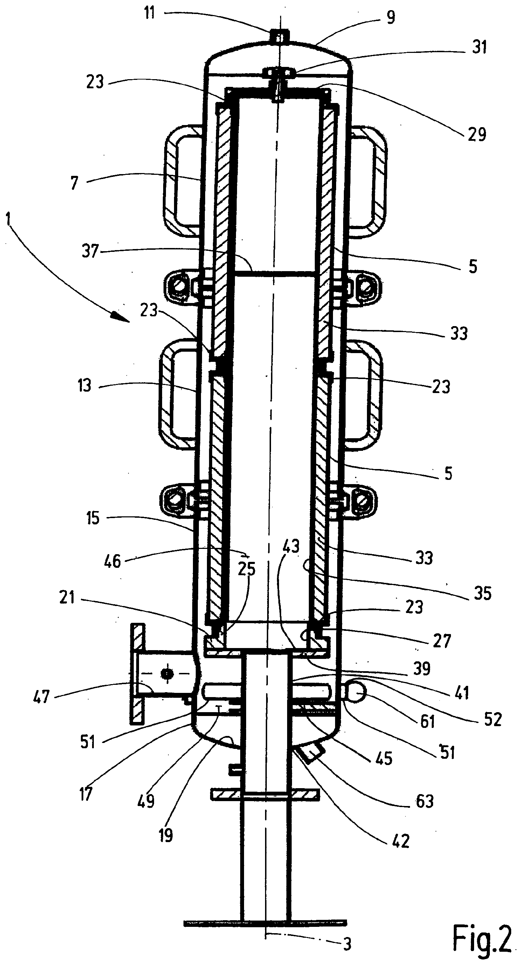

Mit Bezug auf die beigefügten Zeichnungen ist die Erfindung anhand von Ausführungsbeispielen beschrieben, bei denen im kreiszylinderförmigen Filtergehäuse 1, das sich entlang einer vertikalen Hochachse 3 (Fig. 2) erstreckt, eine Filterkerze aufnehmbar ist, die bei den gezeigten Beispielen aus zwei gleich ausgebildeten Filterelementen 5 gebildet ist. Das Gehäuse 1 ist aus drei miteinander verschraubten Gehäuseabschnitten gebildet, von denen der oberste Abschnitt 7 durch ein oberes Endteil 9 geschlossen ist, das eine zentrale, verschließbare Entlüftungsöffnung 11 aufweist. An den oberen Gehäuseabschnitt 7 schließt sich ein mittlerer rohrförmiger Gehäuseabschnitt 13 an, gefolgt von einem unteren Gehäuseabschnitt 15. Dieser geht in ein den unteren Gehäuseabschluss bildendes Bodenteil 17 über, dessen Grund 19 eine nach außen leicht gewölbte Bodenfläche bildet.

Als Lagerung für die aus den Filterelementen 5 gebildete Filterkerze ist eine Elementaufnahme 21 in Form eines Ringkörpers vorgesehen. Dieser weist als Anschlussteil für das untere Filterelement 5 und als Sitz für dessen zugewandte Endkappe 23 einen stutzenartig axial nach oben vorstehenden Vorsprung 25 auf, der eine zentrale Öffnung 27 der Elementaufnahme 21 umgibt. Der das Anschlussteil bildende Vorsprung 25 weist an der radial außen liegenden Seite eine Schrägfläche auf, an der eine komplementäre Schrägfläche anliegt, die an der Endkappe 23 des Filterelements 5 vorsteht. Mit diesen komplementär vorstehenden Schrägflächen sind auch die übrigen Endkappen 23 der Filterelemente 5 versehen, über die auch das untere Filterelement 5 und das obere Filterelement 5 miteinander in Verbindung sind, wobei jeweils ein in der Zeichnung nicht sichtbarer Dichtring zwischen den zusammenwirkenden Schrägflächen angeordnet ist. Als oberer Endverschluss für die Filterkerze ist ein den Vorsprung 25 der Endkappe 23 des oberen Filterelements 5 übergreifendes Deckelteil 29 vorgesehen, an dem sich eine zentrale Entlüftungseinrichtung 31 befindet.

In der bei derartigen Filteranordnungen üblichen Weise liegt an der Innenseite des Filtermediums 33 der Filterelemente 5 ein fluiddurchlässiges Stützrohr 35 an, das sich durchgehend von der an der Elementaufnahme 21 befindlichen Endkappe 23 bis zur oberen Endkappe 23 des oberen Filterelements 5 durchgehend erstreckt und im oberen Längenbereich durch einen Verstärkungsring 37 versteift ist. Der Ringkörper der Elementaufnahme 21 ist auf einer Tragplatte 39 gelagert, die ihrerseits durch ein sich koaxial erstreckendes Rohr 41 gehäusefest gehalten ist. Dieses Rohr 41 bildet, von der zentralen Öffnung 43 der Tragplatte 39 ausgehend, die Ausgangsleitung, über die beim Filtrationsvorgang das Filtrat aus dem inneren Filterhohlraum 46 der Filterkerze ausströmt und über einen Filterauslasses oder Filterausganges 42 austritt. Das Rohr 41 als Teil des Filterauslasses 42 ist über radial verlaufende Stege 45 an der Gehäuseinnenwand des unteren Gehäuseabschnitts 15 abgestützt, die sich am Übergang des unteren Gehäuseabschnitts 15 zum Bodenteil 17 in Radialrichtung erstrecken.

Das Rohr 41 tritt, zur Achse 3 koaxial, am Grund 19 des Bodenteils 17 aus dem Gehäuse 1 aus. Im Bereich zwischen den Stegen 45 und der Tragplatte 39 der Elementaufnahme 21 befindet sich an der Gehäuseseitenwand ein Einlass 47 für die Zufuhr des Unfiltrats zu dem sich an den Einlass 47 anschließenden Teil des Unfiltratraums 49, der sich innerhalb des unteren Teils des Gehäuseabschnitts 15 und innerhalb des anschließenden Bodenteils 17 befindet. Über die Außenseite der Tragplatte 39 der Elementaufnahme 21 und entlang der Außenseite des Filtermediums 33 der Filterelemente 5 setzt sich der Unfiltratraum 49 nach oben bis zum oberen Gehäuseende fort.

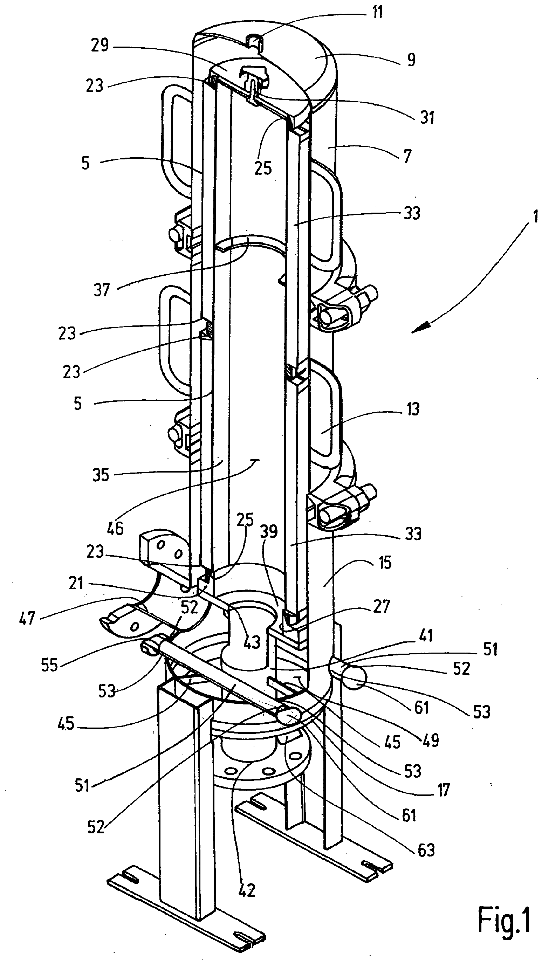

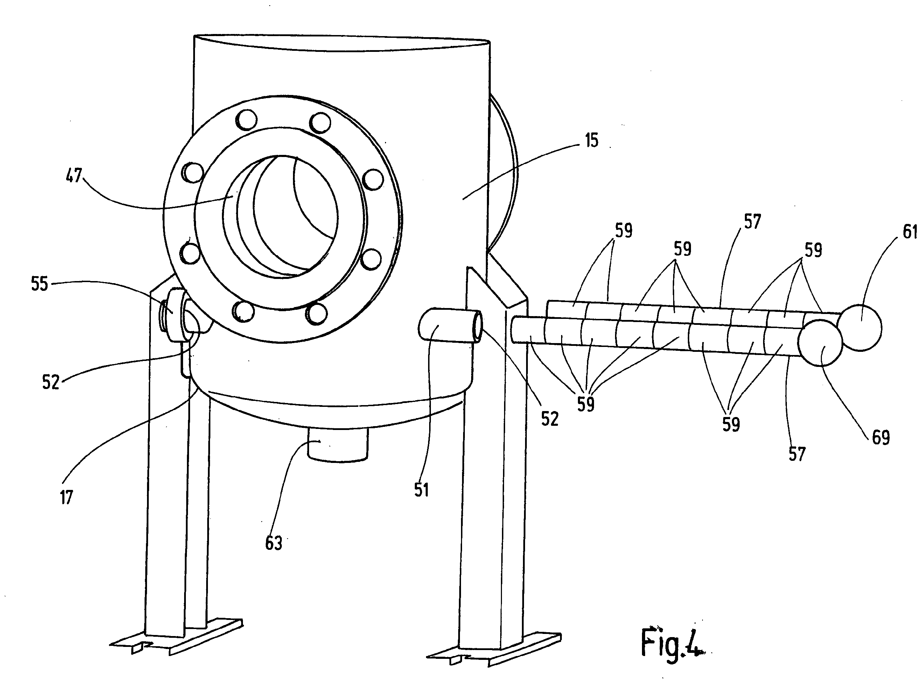

Auf Höhe des unteren Randbereichs des Einlasses 47 und oberhalb der Stege 45 erstrecken sich Rohre 51 von einer Gehäuseseitenwand zu einer anderen Gehäuseseitenwand. Dabei erstrecken sich die Rohre 51 in geschlossenem Verlauf, von Zugangsöffnungen 53 der Gehäusewand ausgehend, durch den gesamten Unfiltratraum 49 hindurch. Der Innenraum der Rohre 51 ist daher fluiddicht vom Unfiltratraum 49 getrennt. Über die Zugangsöffnungen 53 stehen die Rohre 51 mit einem Rohrende 52 geringfügig über. An je einem der überstehenden Rohrenden 52 sind die Rohre 51 durch einen in Fig. 1 sichtbaren Stopfen 55 geschlossen, während die gegenüberliegenden Rohrenden 52 offen sind. Wie ebenfalls die Fig. 1 zeigt, verlaufen die Rohre 51, zueinander parallel und horizontal, seitlich neben dem die Ausgangsleitung bildenden Rohr 41. Von dem jeweils offenen Rohrende 52 her ist in jedes Rohr 51 ein Magnetstab 57 einschiebbar und herausziehbar. Diese Magnetstäbe 57, auch Magnetkerzen genannt, sind in bekannter Weise durch eine Gruppe aufeinanderfolgender Permanentmagnete 59 (s. Fig. 4) gebildet und weisen an einem Ende eine kugelige Handhabe 61 für bequemes manuelles Einschieben und Herausziehen der Magnetstäbe 57 aus dem jeweiligen Rohr 51 auf.

Im Filtrationsbetrieb befinden sich die Rohre 51 direkt im Einströmbereich des über den Einlass 47 zugeführten Unfiltrats. Bei in den Rohren 51 befindlichen Magnetstäben 57 lagern sich durch die von den Permanentmagneten 59 erzeugte Magnetkraftwirkung ferromagnetische Partikel an der Außenseite der Rohre 51 an, so dass innerhalb des unterhalb der Filterelemente 5 gelegenen Gehäusebereichs eine Vorabscheidung stattfindet, bevor das Unfiltrat zur Filterkerze aufsteigt, wo der Filtrationsvorgang von der Außenseite des Filtermediums 33 her zum inneren Filterhohlraum 46 hin stattfindet, der die Filtratseite bildet. Für den Austrag der an den Rohren 51 angelagerten Partikel werden die Magnetstäbe 57 aus den Rohren 51 herausgezogen. Durch den damit einhergehenden Wegfall der Magnetraftwirkung fallen die angesammelten Partikel von den Rohren 51 zum Grund 19 des Bodenteils 17 ab. Neben dem die Ausgangsleitung für das Filtrat bildenden Rohr 41 befindet sich am Grund 19 des Bodenteils 17 ein Partikelauslass 63, an dem ein nicht gezeigtes Absperrorgan vorgesehen ist, das in einer Offenstellung den Auslass 63 freigibt, wenn ein Austrag der am Grund 19 des Bodenteils 17 angesammelten Partikel durchzuführen ist. Dies kann auf einfache Weise durch einen Spülvorgang erfolgen, bei dem das unter Systemdruck über den Einlass 47 einströmende Unfiltrat die Partikel durch den geöffneten Auslass 63 ausspült. Vorzugsweise ist dabei der Filtratauslass 42 am Rohr 41 geschlossen, so dass für den Spülvorgang der gesamte Systemdruck wirksam ist. Da die Rohre 51 hierbei im Strömungsbereich des über den Einlass 47 eintretenden Unfiltrats liegen, werden auch etwaige Partikel, die trotz Wegfalls der Magnetkraftwirkung an den Rohren 51 verblieben sein sollten, von der Strömung mitgeführt und dadurch ausgetragen.

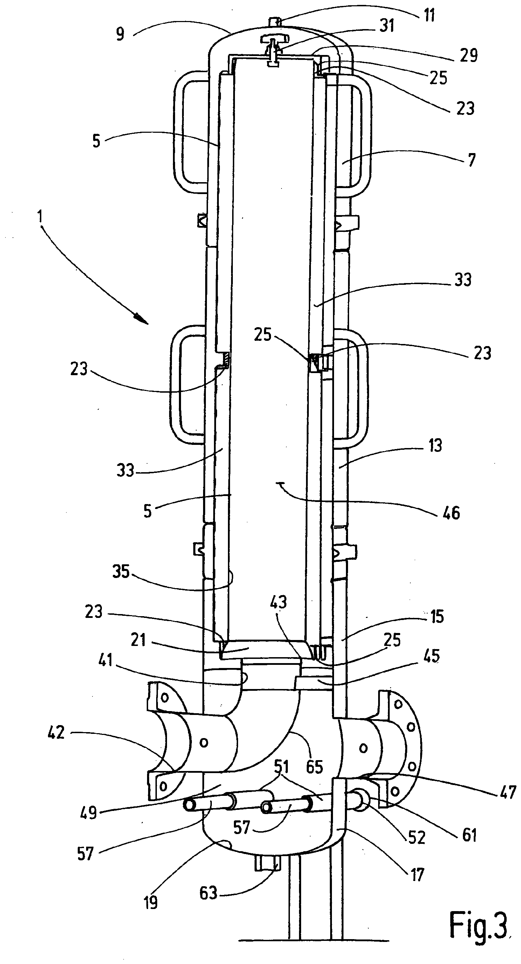

Die Fig. 3 bis 5 zeigen ein zweites Ausführungsbeispiel der erfindungsgemäßen Filtervorrichtung, das sich vom erstbeschriebenen Ausführungsbeispiel lediglich durch eine abgewandelte Bauweise des sich unterhalb der Elementaufnahme 21 befindlichen Gehäuseteils unterscheidet. Wie beim ersten Ausführungsbeispiel ist die Elementaufnahme 21 für die Filterkerze über das die Ausgangsleitung bildende Rohr 41 gehalten, das seinerseits, wie das Rohr 41 beim ersten Ausführungsbeispiel, über radial zur Gehäuseseitenwand verlaufende Stege 45 gehäusefest gehalten ist. Im Unterschied zum ersten Ausführungsbeispiel erstreckt sich das Rohr 51 nicht koaxial zum Grund 19 des Bodenteils 17, sondern ist über einen Rohrkrümmer 65 zum Filtratauslass 42 als Teil derselben hin abgewinkelt, der sich an der Gehäuseseitenwand im Bereich zwischen Elementaufnahme 21 und den Rohren 51 befindet.

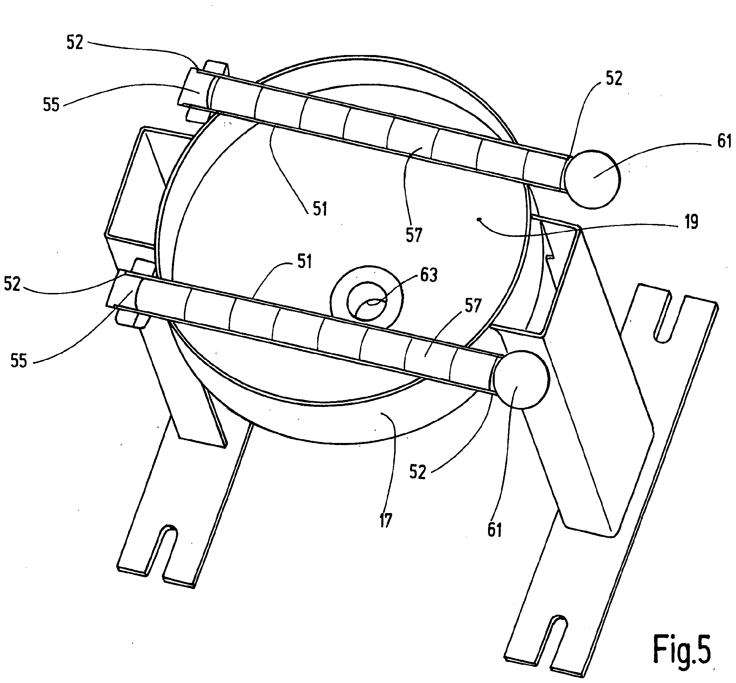

Auf der dem Auslass 42 gegenüberliegenden Seite befindet sich der Unfiltrateinlass 47, der gegenüber dem Filtratausgang 42 geringfügig nach unten versetzt angeordnet ist. Bei der seitlichen Anordnung des Filtratauslasses 42 ist der Zentralbereich des Grundes 19 des Bodenteils 17 frei für den koaxial angeordneten Partikelauslass 63. In geringem Abstand unterhalb des Unfiltrateinlasses 47 sind die die Hülle für Magnetstäbe 57 bildenden Rohre 51 in gleicher Weise wie beim ersten Ausführungsbeispiel im Abstand voneinander parallel und horizontal verlaufend angeordnet, siehe Fig. 5.

Die Funktionsweise des zweiten Ausführungsbeispiels entspricht bei dieser Anordnung dem ersten Ausführungsbeispiel, d.h. der Austrag von an den Rohren 51 angesammelten Partikeln kann bei entfernten Magnetstäben 57 durch Ausspülen über den Partikelauslass 63 ausgetragen werden. Während bei beiden Ausführungsbeispielen die als Hülle der Magnetstäbe 57 dienenden Rohre 51 an jeweils einem Rohrende 52, die auf der gleichen Gehäuseseite liegen, mittels Stopfen 55 geschlossen sind, könnten die Stopfen 55 weggelassen werden, so dass Magnetstäbe 57 von beliebiger Gehäuseseite her, die von der Einbausituation her günstig zugänglich ist, eingebracht oder herausgezogen werden könnten. Auch könnte ein Rohr 51 an einer Gehäuseseite und das andere Rohr 51 an der anderen Gehäuseseite geschlossen sein. Ebenso könnte eine andere Anzahl von Rohren 51 als Hüllen für eine entsprechende Anzahl Magnetstäbe 57 vorgesehen sein.

## Patentansprüche

1. Filtervorrichtung für Fluide, mit einem zumindest ein Filterelement (5) aufnehmenden Gehäuse (1), das einen Einlass (47) für die Zufuhr abzureinigenden Fluids zu einem Unfiltratraum (49) des Gehäuses (1) aufweist, der durch das Filtermedium (33) des jeweiligen Filterelements (5) von einem Filtratraum (46) des Gehäuses (1) getrennt ist, der einen Auslass (42) für Filtrat aufweist, und mit einer innerhalb des Unfiltratraums (49) angeordneten magnetfelderzeugenden Einrichtung (57), die eine Anhaftfläche (51) für durch Magnetkraftwirkung daran angelagerte ferromagnetische Partikel aufweist, die durch zumindest eine die zugeordnete magnetfelderzeugende Einrichtung (57) umfassende Hülle (51) gebildet ist, die sich von zumindest einer Öffnung (53) der Gehäusewand her in den Unfiltratraum (49), erstreckt und in der die jeweilige magnetfelderzeugende Einrichtung (57) derart bewegbar aufnehmbar ist, dass sie in die Hülle (51) einbringbar und aus dieser zumindest teilwiese wieder herausnehmbar ist, wobei sich die die Anhaftfläche (51) bildende, jeweilige Hülle (51) im Einströmbereich des Unfiltrats in das Gehäuse (1) befindet, **dadurch gekennzeichnet, dass** die jeweilige Hülle (51) außerhalb des jeweiligen Filterelementes (5) sich im Unfiltratraum (49) parallel zu dem Einlass (47) und quer zu dem Auslass (42) erstreckt und dass der Unfiltratraum (49) zumindest teilweise den Auslass (42) an der Stelle des Überganges zum Filtratraum (46) umfasst.

2. Filtervorrichtung nach Anspruch 1, **dadurch gekennzeichnet, dass** das Gehäuse (1) sich zumindest im Betrieb entlang einer vertikalen Hochachse (3) erstreckt und aus mindestens zwei Gehäuseabschnitten (7, 13, 15) gebildet ist, von denen der untere Gehäuseabschnitt (15) den Einlass (47) und den Auslass (42) aufnimmt, sowie die jeweilige magnetfelderzeugende Einrichtung (57) und dass die jeweils anderen Gehäuseabschnitte (7, 13) der Aufnahme zumindest eines Filterelementes (5) dienen.

3. Filtervorrichtung nach Anspruch 1 oder 2, **dadurch gekennzeichnet, dass** der untere Gehäuseabschnitt (15) bodenseitig geschlossen ist und über mindestens einen öffenbaren Auslass (63) für Partikel derart verfügt, dass bei vorzugsweise geschlossenem Auslass (42) für Filtrat das über den Einlass (47) einströmende Unfiltrat die von der jeweils magnetfelderzeugenden Einrichtung (57) gesammelten Partikel von dieser Einrichtung (57) abspült und/oder den unteren Gehäuseabschnitt (15) von Partikeln abreinigt.

4. Filtervorrichtung nach einem der vorstehenden Ansprüche, **dadurch gekennzeichnet, dass** beidseits des Auslasses (42) für Filtrat und auf derselben Niveauebene zwei parallel zueinander angeordnete magnetfelderzeugende Einrichtungen (57) mit ihren Hüllen (51) den unteren Gehäuseabschnitt (15) mit seinem Auffangraum für Partikel zumindest teilweise, vorzugsweise vollständig, durchgreifen.

5. Filtervorrichtung nach einem der vorstehenden Ansprüche, **dadurch gekennzeichnet, dass** die jeweilige magnetfelderzeugende Einrichtung (57) einen durch eine Gruppe von Permanentmagneten (59) gebildeten Magnetstab (57) aufweist, der in einer rohrförmigen Hülle (51) verschiebbar und an einem Rohrende der Hülle (51) für die Handhabung zugänglich ist.

6. Filtervorrichtung nach Anspruch 5, **dadurch gekennzeichnet, dass** mehr als eine rohrförmige Hülle (51) für einen jeweiligen Magnetstab (57) vorgesehen ist.

7. Filtervorrichtung nach einem der Ansprüche 2 bis 6, **dadurch gekennzeichnet, dass** der untere Gehäuseabschnitt (15) mit einem Bodenteil (17) als bodenseitigem Abschluss versehen ist, dessen Grund den unteren Abschluss des Unfiltratraums (49) bildet, der sich entlang der Außenseite des Filtermediums (33) des jeweiligen Filterelements (5) nach oben fortsetzt, das in einem axialen Abstand vom Grund (19) des Bodenteils (17) angeordnet ist, und dass zumindest eine rohrförmige Hülle (51) sich in horizontaler Richtung durch den zwischen dem Grund (19) des Bodenteils (17) und dem Filterelement (5) befindlichen Teil des Unfiltratraums (49) hindurch erstreckt.

8. Filtervorrichtung nach Anspruch 7, **dadurch gekennzeichnet, dass** an einer das jeweilige Filterelement (5) in einem axialen Abstand vom Grund (19) des Bodenteils (17) festlegenden Elementaufnahme (21) eine Fluidverbindung (27, 43) zwischen dem inneren Hohlraum (46) des Filterelements (5), der beim Filtrationsvorgang den Filtratraum bildet, und einer Ausgangsleitung (41) für Filtrat als Teil des Auslasses (42) ausgebildet ist, und dass beidseits der Ausgangsleitung (41) je eine rohrförmige Hülle (51) sich durch den Unfiltratraum (49) hindurch im Abstand vom Grund (19) des Bodenteils (17) erstreckt.

9. Filtervorrichtung nach Anspruch 8, **dadurch gekennzeichnet, dass** die Ausgangsleitung (41) koaxial zur Hochachse (3) von der Elementaufnahme (21) zum am Grund (19) des Bodenteils (17) befindlichen Filtratauslass (42) verläuft und dass am Grund (19) des Bodenteils (17) neben dem Filtratauslass (42) ein Auslass (63) für von der jeweilige Hülle (51) abgefallene ferromagnetische Partikel vorgesehen ist.

10. Filtervorrichtung nach Anspruch 8 oder 9, **dadurch gekennzeichnet, dass** die Ausgangsleitung (41) von der Elementaufnahme (21) zu dem an der Seitenwand des Gehäuses (1) befindlichen Filtratauslass (42) verläuft und dass am Grund (19) des Bodenteils (17), koaxial zur Hauptachse (3), der Auslass (63) für von der jeweiligen Hülle (51) abgefallene ferromagnetische Partikel vorgesehen ist.

11. Filtervorrichtung nach einem der Ansprüche 5 bis 10, **dadurch gekennzeichnet, dass** Hüllen in Form von von einer Gehäuseseitenwand zu einer anderen Gehäuseseitenwand durchgehenden Rohren (51) vorgesehen sind, die vorzugsweise an einem Rohrende (52) geschlossen sind und mit einem jeweiligen offenen Rohrende (52) den Zugang für je einen Magnetstab (57) bilden.

12. Filtervorrichtung nach einem der Ansprüche 5 bis 11, **dadurch gekennzeichnet, dass** die Magnetstäbe (57) sich bei in den Hüllen (51) eingebrachter Position bis zu einem vorzugsweise geschlossenen Rohrende (52) erstrecken und an einem anderen Rohrende (52) mit einem eine Handhabe (61) bildenden Endteil für eine Betätigung von Hand aus dem Rohrende (52) vorstehen.

## Claims

1. A filter device for fluids, with a housing (1) accommodating at least one filter element (5), which housing has an inlet (47) for the supply of fluid to be cleaned to an unfiltrate chamber (49) of the housing (1), which unfiltrate chamber (49) is separated from a filtrate chamber (46) of the housing (1) by the filter medium (33) of the respective filter element (5), which filtrate chamber (46) has an outlet (42) for filtrate, and with a magnetic field-generating device (57) arranged within the unfiltrate chamber (49), which device has an adhering surface (51) for ferromagnetic particles deposited there by magnetic force, which device is formed by at least one casing (51) surrounding the associated magnetic field-generating device (57), which casing extends from at least one opening (53) of the housing wall into the unfiltrate chamber (49) and in which the respective magnetic field-generating device (57) is moveably accommodated such that it can be inserted and at least partially retracted again from the casing (51), wherein the respective casing (51) forming the adhering surface (51) is located in the inflow region of the unfiltrate in the housing (1), **characterised in that** the respective casing (51) extends outside the respective filter element (5) in the unfiltrate chamber (49) parallel to the inlet (47) and transverse to the outlet (42), and that the unfiltrate chamber (49) at least partially comprises the outlet (42) at the point of the transition to the filtrate chamber (46).

2. The filter device according to claim 1, **characterised in that**, at least in operation, the housing (1) extends along a vertical axis (3) and is formed of at least two housing sections (7, 13, 15), the lower housing section (15) of which accommodates the inlet (47) and the outlet (42) as well as the respective magnetic field-generating device (57), and that the respective other housing sections (7, 13) serve to accommodate at least one filter element (5).

3. The filter device according to claim 1 or 2, **characterised in that** the bottom of the lower housing section (15) is closed and has available at least one openable outlet (63) for particles such that, with a preferably closed filtrate outlet (42), the unfiltrate flowing in via the inlet (47) flushes off the particles collected by the respective magnetic field-generating device (57) from this device (57) and/or cleans the lower housing section (15) of contaminating particles.

4. The filter device according to one of the preceding claims, **characterised in that**, on both sides of the filtrate outlet (42) and on the same level, the casings (51) of two magnetic field-generating devices (57) arranged parallel to each other extend at least partially, preferably fully, through the lower housing section (15) with its catchment area.

5. The filter device according to one of the preceding claims, **characterised in that** the respective magnetic field-generating device (57) has a magnetic rod (57) formed by a group of permanent magnets (59), which rod can be moved inside a tubular casing (51) and is accessible, for handling purposes, at one end of the tubular casing.

6. The filter device according to claim 5, **characterised in that** more than one tubular casing (51) is provided for a respective magnetic rod (57).

7. The filter device according to one of claims 2 to 6, **characterised in that** the lower housing section (15) is provided with a bottom part (17) forming a bottom-end closure, the base of which forms the lower closure of the unfiltrate chamber (49) which extends along the outside of the filter medium (33) of the respective filter element (5) upwards, which is arranged at an axial distance from the base (19) of the bottom part (17), and that at least one tubular casing (51) extends in horizontal direction through the part of the unfiltrate chamber (49) located between the base (19) of the bottom part (17) and the filter element (5).

8. The filter device according to claim 7, **characterised in that**, on an element seat (21), establishing an axial distance of the respective filter element (5) from the base (19) of the bottom part (17), a fluid connection (27, 43) is formed between the inner hollow space (46) of the filter element (5), which forms the filtrate chamber during the filtration process, and an outlet line (41) for filtrate as part of outlet (42), and that a tubular casing (51) extends through the unfiltrate chamber (49) on either side of the outlet line (41) at a distance from the base (19) of the bottom part (17).

9. The filter device according to claim 8, **characterised in that** the outlet line (41) extends coaxial to the vertical axis (3) from the element seat (21) to the filtrate outlet (42) located at the base (19) of the bottom part (17), and that an outlet (63) is provided on the base (19) of the bottom part (17), adjacent to the filtrate outlet (42), for the ferromagnetic particles which have dropped from the respective casing (51).

10. The filter device according to claim 8 or 9, **characterised in that** the outlet line (41) extends from the element seat (21) to the filtrate outlet (42) located on the side wall of the housing (1), and that the outlet (63) for the ferromagnetic particles which have dropped from the respective casing (51) is provided at the base (19) of the bottom part (17), coaxial to the principal axis (3).

11. The filter device according to one of claims 5 to 10, **characterised in that** casings in the form of tubes (51) extending from one housing side wall to another housing side wall are provided, which tubes (51) are preferably closed at one tube end (52) and, at the other tube end (52), form access for a magnetic rod (57) each.

12. The filter device according to one of claims 5 to 11, **characterised in that** the magnetic rods (57), in position inserted into the casings (51), extend up to a preferably closed tube end (52), and protrude with an end section forming a handle (61) at another tube end (52) to enable manual operation.

## Revendications

1. Installation de filtration de fluide, comprenant un boîtier (1) qui reçoit au moins un élément (5) de filtre et qui a une entrée (47) pour amener du fluide à épurer à un espace (49) pour du non filtrat du boîtier (1) séparé par le milieu (33) filtrant de l'élément (5) de filtre respectif d'un espace (46) pour du filtrat du boîtier (1) qui a une sortie (42) pour du filtrat et comprenant un dispositif (57) disposé à l'intérieur de l'espace (49) et produisant un champ magnétique et qui a une surface (51) d'adhérence de particules ferromagnétiques qui s'y déposent par effet d'un force magnétique, surface qui est formée par au moins une enveloppe (51) qui enveloppe le dispositif (57) associé produisant un champ magnétique, qui s'étend d'au moins une ouverture (53) de la paroi du boîtier à l'espace (49) pour du non filtrat et dans laquelle le dispositif (57) produisant un champ magnétique peut être reçu de manière à pouvoir se déplacer, de façon à pouvoir être introduit dans l'enveloppe (51) et à pouvoir en être retiré au moins en partie, l'enveloppe (51) formant la surface (51) d'adhérence se trouvant dans la région d'afflux du non filtrat dans le boîtier (1), **caractérisée en ce que** l'enveloppe (51) s'étend à l'extérieur de l'élément (5) de filtre respectif dans l'espace (49) pour du non filtrat, parallèlement à l'entrée (47) et transversalement à la sortie (42) et **en ce que** l'espace (49) pour du non filtrat entoure, au moins en partie, la sortie (42) au point de la transition avec l'espace (46) pour du filtrat.

2. Installation de filtration suivant la revendication 1, **caractérisée en ce que** le boîtier (1) s'étend au moins en fonctionnement suivant un axe (3) vertical et est formée d'au moins deux parties (7, 13, 15) de boîtier parmi lesquelles la partie (15) inférieure de boîtier reçoit l'entrée (47) et la sortie (42), ainsi que le dispositif (57) produisant un champ magnétique et **en ce que** les autres parties (7, 13) du boîtier servent à la réception d'au moins un élément (5) de filtre.

3. Installation de filtration suivant la revendication 1 ou 2, **caractérisée en ce que** la partie (15) de boîtier est fermée du côté du fond et dispose d'au moins une sortie (63) pouvant être ouverte pour des particules, de manière à ce que alors que la sortie (42) pour du filtrat est de préférence fermée, le non filtrat entrant par l'entrée (47) fait partir de ce dispositif (57) par lavage les particules rassemblées par le dispositif (57) produisant un champ magnétique et/ou nettoie de particules la partie (15) inférieure du boîtier.

4. Installation de filtration suivant l'une des revendications précédentes, **caractérisée en ce que** de part et d'autre de la sortie (42) pour du filtrat et sur le même plan de niveau, deux dispositifs (57), produisant un champ magnétique et disposés parallèlement l'un à l'autre, traversent au moins en partie, de préférence complètement par leurs enveloppes (51) la partie (15) inférieure du boîtier avec son espace de capture de particules.

5. Installation de filtration suivant l'une des revendications précédentes, **caractérisée en ce que** le dispositif (57) produisant un champ magnétique a un barreau (57) magnétique qui est formé d'un groupe d'aimants (59) permanents, qui peut coulisser dans une enveloppe (51) tubulaire et qui est accessible à la manipulation à une extrémité de tube de l'enveloppe (51).

6. Installation de filtration suivant la revendication 5, **caractérisée en ce qu'**il est prévu plus qu'une enveloppe (51) tubulaire pour un barreau (57) magnétique.

7. Installation de filtration suivant l'une des revendications 2 à 6, **caractérisée en ce que** la partie (15) inférieure du boîtier est pourvue d'une partie (17) de fond comme fermeture du côté du fond, dont le fond forme la fermeture inférieure de l'espace (49) pour du non filtrat, qui se prolonge vers le haut le long du côté extérieur du milieu (33) filtrant de l'élément (5) de filtre disposé à une distance axiale du fond (19) de la partie (17) de fond et **en ce qu'**au moins une enveloppe (51) tubulaire s'étend dans la direction horizontale dans la partie de l'espace (49) pour du non filtrat se trouvant entre le fond (19) de la partie (17) de fond et l'élément (5) de filtre.

8. Installation de filtration suivant la revendication 7, **caractérisée en ce que**, à un logement (21) d'élément fixant l'élément (5) de filtre à une distance axiale du fond (19) de la partie (17) de fond, est constituée une liaison (27, 43) fluidique entre l'espace (46) creux intérieur de l'élément (5) de filtre qui forme l'espace pour du filtrat lors de la filtration et un conduit (41) de sortie pour du filtrat comme partie de la sortie (42) et **en ce que** de part et d'autre du conduit (41) de sortie, respectivement, une enveloppe (51) tubulaire s'étend dans l'espace (49) pour du non filtrat à distance du fond (19) de la partie (17) de fond.

9. Installation de filtration suivant la revendication 8, **caractérisée en ce que** le conduit (41) de sortie s'étend coaxialement à l'axe (3) vertical du logement (21) d'élément vers la sortie (42) pour du filtrat se trouvant au fond (19) de la partie (17) de fond et **en ce qu'**au fond (19) de la partie (17) de fond est prévue, à côté de la sortie (42) pour du filtrat, une sortie (63) pour des particules ferromagnétiques tombées de l'enveloppe (51).

10. Installation de filtration suivant la revendication 8 ou 9, **caractérisée en ce que** le conduit (41) de sortie s'étend du logement (21) d'élément à la sortie (42) pour du filtrat se trouvant sur la paroi latérale du boîtier (1) et **en ce qu'**au fond (19) de la partie (17) de fond est prévue, coxialement à l'axe (3) principal, la sortie (63) pour des particules ferromagnétiques tombées de l'enveloppe (51).

11. Installation de filtration suivant l'une des revendications 5 à 10, **caractérisée en ce qu'**il est prévu des enveloppes sous la forme de tubes (51) continus d'une paroi latérale du boîtier à une autre paroi latérale du boîtier, tubes (51) qui sont fermés de préférence à une extrémité (52) et qui forment, par une extrémité (52) ouverte, l'accès pour un barreau (57) magnétique.

12. Installation de filtration suivant l'une des revendications 5 à 11, **caractérisée en ce que** les barreaux (57) magnétiques s'étendent dans la position où ils sont introduits dans les enveloppes (51) jusqu'à une extrémité (52) de tube de préférence fermée et, à l'autre extrémité (52) du tube, font saillie de l'extrémité (52) du tube par une partie d'extrémité formant une poignée (61) pour un actionnement à la main.
